Europäisches Patentamt

(19) European Patent Office

Office européen des brevets

(11) Numéro de publication: **0 123 652**
**A1**

(12) # DEMANDE DE BREVET EUROPEEN

(21) Numéro de dépôt: **84810153.1**

(22) Date de dépôt: **29.03.84**

(51) Int. Cl.³: **G 11 B 27/32**
**G 11 B 15/00, G 11 B 5/008**

(30) Priorité: **08.04.83 CH 1909/83**

(43) Date de publication de la demande:
**31.10.84 Bulletin 84/44**

(84) Etats contractants désignés:
**AT BE DE FR GB IT LU NL SE**

(71) Demandeur: **Hormozi, Farhad**
**Les Hauts de Schiffenen 38**
**CH-1700 Fribourg(CH)**

(72) Inventeur: **Hormozi, Farhad**
**Les Hauts de Schiffenen 38**
**CH-1700 Fribourg(CH)**

(74) Mandataire: **Hranitzky, Wilhelm Max et al,**
**c/o WILLIAM BLANC & CIE Conseils en propriété**
**industrielle SA 6, rue de la Grotte**
**CH-1003 Lausanne(CH)**

(54) Procédé de repérage des séquences enregistrées sur une bande magnétique.

(57) Le procédé permet la recherche très précise du début d'une séquence par la génération d'un codage d'une des pistes de la bande à l'aide d'un microordinateur (6) en réalisant une synchronisation avec un oscillateur.

L'agencement du dispositif de mise en oeuvre du procédé permet la sélection automatique de n'importe quelle séquence enregistrée sur la bande par simple appui sur une seule touche.

EP 0 123 652 A1

Croydon Printing Company Ltd.

PROCEDE DE REPERAGE DES SEQUENCES ENREGISTREES SUR UNE BANDE
MAGNETIQUE

Les magnétophones que l'on trouve actuellement sur le marché, et notamment les magnétoscopes, présentent des perfectionnements importants. En particulier, pour certains d'entre eux, les fonctions les plus importantes sont déclenchées par des commandes électroniques et le raccordement de nombreux accessoires est possible. Parmi ces divers accessoires, il existe des dispositifs permettant la recherche automatique de séquences, certains étant programmables. L'utilisation de tels dispositifs montre que, néanmoins, la recherche automatique de séquences que l'on obtient n'est pas absolument précise et que d'autre part le maniement de ces dispositifs n'est pas toujours évident nécessitant notamment d'appuyer sur plusieurs touches selon un ordre bien déterminé.

Le but de la présente invention est de présenter un procédé de repérage des séquences enregistrées sur une bande magnétique, et notamment sur une bande vidéo, permettant la recherche très précise du début d'une séquence en générant un codage d'une des pistes de la bande par l'intermédiaire d'un microordinateur, en réalisant une synchronisation. Le but de la présente invention est aussi de présenter un dispositif de mise en oeuvre de ce procédé pour la sélection automatique des séquences enregistrées sur une telle bande, cette sélection pouvant être commandée par simple appui sur une seule touche.

A cet effet la présente invention concerne un procédé de repérage des séquences enregistrées sur une bande magnétique tel que décrit dans la revendication 1.

L'invention concerne aussi un dispositif de mise en oeuvre du procédé tel que décrit dans la revendication 4.

L'invention concerne également l'application du procédé telle que décrite dans la revendication 11.

Par rapport à l'art antérieur, le procédé selon l'invention permet une recherche de séquences beaucoup plus précise. Il permet de repérer exactement la position du début d'une séquence enregistrée sur la bande, grâce au codage d'une des pistes de cette bande. Ce codage est constitué de façon à pouvoir repérer des points sur la bande situés à des intervalles correspondant à la distance parcourue par la bande pendant une période d'une fraction de seconde pour la vitesse de déroulement habituelle de la bande. Cette grande précision permet de retrouver très exactement le début d'une séquence et supprime le réajustement rendu nécessaire lorsque l'on utilise les magnétophones ou magnétoscopes actuellement disponibles sur le marché. De plus, le dispositif présenté pour la mise en oeuvre de ce procédé permet une sélection très simple d'une séquence quelconque de la bande en appuyant sur une seule touche de commande. Ceci permet l'utilisation de l'installation par n'importe quel néophyte, puisqu'il suffit de mettre l'installation sous tension, si elle ne l'est pas, et d'appuyer sur la touche sur laquelle est indiqué le sujet de la séquence.

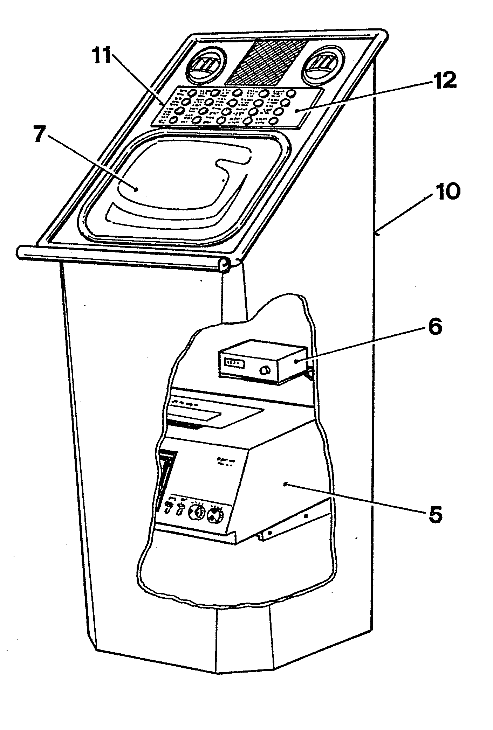

On comprendra mieux l'invention à l'aide de la description qui suit, donnée à titre d'exemple pour une bande vidéo. Le dessin ci-joint montre une vue éclatée en perspective d'un exemple d'installation réalisée selon l'invention.

Diverses séquences sont enregistrées de façon séquentielle sur la piste 1 d'une bande vidéo comportant deux pistes 1, 2. Le procédé consiste à réaliser un codage de la piste 2 par l'intermédiaire d'un microordinateur doté d'une mémoire. A l'aide d'un oscillateur, on réalise une synchronisation des séquences enregistrées sur la piste 1, cette synchronisation permettant de repérer très exactement la position du début d'une séquence ainsi que sa longueur. On peut utiliser pour cette synchronisation un oscillateur travaillant par exemple avec une fréquence de 50 Herz. Il est alors possible de repérer des points sur la bande situés à un intervalle correspondant à une période de 1/50ème de seconde. Lorsque la bande est positionnée exactement au début d'une séquence, le microordinateur enregistre un code sur la piste 2 de la bande et conserve en mémoire les données de ce code sous forme numérique. Lorsque toutes les séquences ont été repérées de cette façon, les données numériques mémorisées dans la mémoire du microordinateur sont automatiquement copiées sur un premier tronçon 3 de la bande laissé libre jusqu'ici et dont la longueur correspond par exemple à la durée de déroulement de la bande à vitesse normale pendant 20 secondes. Le dispositif de mise en oeuvre du procédé se compose d'un magnétoscope relié à un microordinateur programmé de telle façon que, lors de l'utilisation d'une bande préparée avec le procédé selon l'invention, lors de la mise sous tension du magnétoscope ou après tout changement de bande, les données contenues sur le premier tronçon 3 de la piste 2 de la bande sont automatiquement copiées dans la mémoire du microordinateur qui dispose alors de toutes les informations nécessaires au repérage des codes de la piste 2. Le dispositif comporte en outre un écran et un certain nombre de touches, chacune d'elle correspondant à une séquence enregistrée sur la bande. Il s'ensuit que, par simple appui sur une de ces touches, il est possible d'indiquer au microordinateur la séquence que l'on désire visionner. D'autre part, le microordinateur est agencé pour pouvoir utiliser les informations contenues dans sa mémoire de façon optimale, ce qui lui permet, par exemple, une plus grande rapidité de recherche sur la bande, grâce à la possibilité de situer la position de la bande, de faire démarrer immédiatement le défilement de la bande en marche avant ou arrière, sans attendre la fin du mouvement de retrait des guides qui appuient sur la bande et de positionner celle-ci au début d'une autre séquence par le plus court chemin, sans revenir au début de la bande.

Dans une forme d'exécution préférentielle du dispositif, représentée sur le dessin, le magnétoscope 5, le microordinateur 6 et l'écran 7 sont disposés dans une enceinte 10. Le clavier 11 de cette enceinte comporte des

- 4 -

0123652

touches de commande à côté desquelles est indiqué le titre de la séquence à laquelle est attribuée la touche. Ces titres sont indiqués sur un panneau amovible 12, de sorte qu'il est possible de constituer un tel panneau pour chaque bande que l'on désire visionner. Le dispositif est agencé de telle façon que, lorsque l'utilisateur enclenche le contact de mise sous tension, afin d'éviter une brusque élévation importante de tension, la mise sous tension des divers appareils composant le dispositif se fait successivement de façon automatique par relais, dans l'ordre ordinateur, magnétoscope, autres composants de l'enceinte, tels que tubes néon, etc.

Dans une forme particulière d'exécution du dispositif, on peut utiliser par exemple un magnétoscope de la marque PANASONIC modèle à cassettes NV-8200 E, qui figure actuellement parmi les appareils de ce type les plus perfectionnées du marché, permettant une grande rapidité de déroulement avant-arrière, grâce à l'entraînement par deux moteurs, et auxquels on peut connecter une unité de recherche de séquences PANASONIC modèle NV-A 850 qui sera reliée au microordinateur 6, afin d'obtenir la précision de recherche vue plus haut et qui permettra la simplification de sélection des séquences en appuyant notamment sur une seule touche du clavier 11.

# REVENDICATIONS

1. · Procédé de repérage des séquences enregistrées sur la piste (1) d'uné bande magnétique, la bande comportant au moins une deuxième piste (2), caractérisé en ce que l'on réalise une synchronisation des séquences enregistrées sur la piste (1) au moyen d'un oscillateur.

2. Procédé selon la revendication 1, caractérisé en ce que l'on génère un codage de la piste (2) à l'aide d'un microordinateur.

3. Procédé selon la revendication 2, caractérisé en ce que l'on mémorise sur un premier tronçon (3) de la piste (2) les données correspondant aux codes permettant de repérer le début de chaque séquence enregistrée sur la piste (1), ainsi que la longueur et le nombre de ces séquences.

4. Dispositif de mise en oeuvre du procédé selon l'une des revendications précédentes, caractérisé en ce qu'il comprend un moyen de lecture/enregistrement de la bande relié à un microordinateur doté d'une mémoire.

5. Dispositif selon la revendication 4, caractérisé en ce que le moyen de lecture/enregistrement est un magnétophone.

6. Dispositif selon la revendication 4, caractérisé en ce que le moyen de lecture/enregistrement est un magnétoscope.

7. Dispositif selon l'une des revendications 4 à 6, caractérisé en ce que le codage généré sur la piste (2) permet de repérer une position sur la piste (1) avec une précision correspondant à la distance parcourue par la bande pendant une fraction de seconde à vitesse de déroulement normal.

8. Dispositif selon la revendication précédente, caractérisé en ce que cette précision est de 1/50e de seconde.

9. Dispositif selon l'une des revendications 4 à 8, caractérisé en ce qu'il comporte un moyen de transfert automatique dans la mémoire du microordinateur des données contenues dans le premier tronçon (3) de la piste (2) lors de la mise sous tension ou lors de tout changement de bande.

10. Dispositif selon l'une des revendications 4 à 9, caractérisé en ce qu'il comporte un clavier (11), chaque touche de ce clavier permettant de sélectionner une séquence enregistrée sur la piste (1) de la bande.

11. Dispositif selon l'une des revendications 4 à 10, caractérisé en ce que le moyen de lecture/enregistrement est un magnétoscope.

0123652

Office européen
des brevets

# RAPPORT DE RECHERCHE EUROPEENNE

Numéro de la demande

EP 84 81 0153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 333 318 (MINNESOTA MINING AND MANUFACTURING CO.) * Page 8, ligne 26 - page 9, ligne 27; page 9, ligne 34 - page 10, ligne 38; figures 3,4 * | 1,5,7 | G 11 B 27/32 G 11 B 15/00 G 11 B 5/008 |
| A | EP-A-0 074 841 (SONY CORP.) * Page 1, lignes 11-16; page 2, lignes 7-17; page 3, lignes 11-35; page 4, ligne 30 - page 5, ligne 7; page 13, ligne 28 - page 17, ligne 19; page 27, lignes 10-24; page 28, ligne 28 - page 31, ligne 7; page 34, ligne 35 - page 38, ligne 14 * | 1-6,9-11 | |
| A | FR-A-2 045 304 (BRAILLARD et al.) * En entier * | 1,5,7 | DOMAINES TECHNIQUES RECHERCHES (Int. Cl. ³) |
| A | FR-A-2 356 239 (ETAT FRANCAIS) * En entier * | 1,5,7 | G 11 B |
| A | US-A-3 950 782 (CAREY et al.) * Colonne 5, lignes 28-64; colonne 6, ligne 66 - colonne 8, ligne 54; colonne 10, ligne 26 - colonne 12, ligne 9 * | 1-5,7,9,10 | |

--- -/-

Le présent rapport de recherche a été établi pour toutes les revendications

| Lieu de la recherche | Date d'achèvement de la recherche | Examinateur |
|---|---|---|
| LA HAYE | 16-07-1984 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

RAPPORT DE RECHERCHE EUROPEENNE

0123652
Numéro de la demande

EP  84 81 0153

Page  2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-4 224 644  (LEWIS et al.)<br><br>* En entier *<br><br>--- | 1,3-6, 9-11 | |
| A | IBM TECHNICAL DISCLOSURE BULLETIN, vol. 11, no. 7, décembre 1968, pages 752-753, New York, US; R.E. MORRISON: "Channelized recording and playback system"<br><br>----- | 10 | |

DOMAINES TECHNIQUES
RECHERCHES (Int. Cl. 3)

Le présent rapport de recherche a été établi pour toutes les revendications

| Lieu de la recherche | Date d'achèvement de la recherche | Examinateur |
|---|---|---|
| LA HAYE | 16-07-1984 | DAALMANS F.J. |